# EUROPEAN PATENT SPECIFICATION

(11) **EP 2 683 275 B1**
(45) Date of publication and mention of the grant of the patent: **06.05.2015**
(21) Application number: 12714083.8
(22) Date of filing: 08.03.2012
(51) Int. Cl.: A47J 27/00

(54) **SYSTEM FOR TREATING A FOOD PRODUCT**
SYSTEM ZUR BEHANDLUNG EINES LEBENSMITTELPRODUKTS
SYSTÈME PERMETTANT DE TRAITER UN PRODUIT ALIMENTAIRE

(30) Priority: 11.03.2011 NL 1038667
(43) Date of publication of application: 15.01.2014
(73) Proprietor: IXL Nederland B.V., 3998 NH Schalkwijk (NL)
(72) Inventor: VAN OORD, Govert, NL-3998 NH Schalkwijk (NL)
(74) Representative: Nederlandsch Octrooibureau
(86) International application number: PCT/NL2012/000023
(87) International publication number: WO 2012/125021

(56) References cited:
- WO-A1-2006/121397
- US-A- 2 269 689
- US-A- 5 549 041

## Description

The invention relates to a system for treating a food product by means of PEF - Pulsed Electric Field -, in which the system comprises a treatment pan and a coupling station i.e. docking station of a PEF-generator.

Food can be treated by applying over the food a (pulsed) electric field strength of a relatively high voltage. This method is described in Dutch patent application No. 1037939, the contents of this document are considered to be incorporated entirely in this patent application. In WO2006/121397 is disclosed a method and device for continuous treatment of plant material such as root vegetables by applying an electric field to the plant material. Such a field strength is used that pores are created in the cell membranes of the plant cellular material.

Applying a pulsed electric field is often referred to as PEF: Pulsed Electric Field. The food to be treated is for this purpose enclosed in a chamber in which a ground electrode and a voltage electrode are arranged. These electrodes are connected to the PEF-generator, which is adapted to generate and emit a pulsed electric field. A test set-up has shown that this method for treating a food product is fast and highly effective. As a result, there is a need for a system for treating a food product that can be used in the kitchens of institutions, but also in small kitchens of private households. Furthermore the treatment system has to be user friendly and also has to be safe, and should be applicable without disadvantages for the user.

Therefore, the object of the invention is to provide for a user-friendly, easy and inexpensively producible, easy to clean, safe to use and to apply, system for treating a food product with a pulsed electric field.

This object is achieved by the invention in providing a treatment pan comprising an upright sidewall and a bottom for receiving the food to be treated, the treatment pan is provided with a first and a second passage opening, the treatment pan comprises a removable cover, a ground electrode positioned adjacent to the bottom of the treatment pan, a voltage electrode positioned near the cover of the treatment pan, thereby forming an electrode chamber between the two electrodes, a first power line connected to the earth electrode, a second power line connected to the voltage electrode, wherein the first power line extends through the first passage opening to the outside and the second power line extends through the second passage opening to the outside;
the coupling-station is arranged for receiving the treatment pan in the use position for treating the food product, the coupling station comprises a first connecting line to the PEF-generator of the pulsed electric field and a second connecting line to the PEF-generator, in such a way that in the use position of the treatment pan a pulsed electric field is transmitted from the PEF-generator through the connecting lines and through the power lines to the electrodes in the preparation pan for treating the food product. By the above measures a treatment system is obtained that, in both small as well as in large kitchens, modularly can be applied, that is user-friendly because it is easy to clean, and that can be used safely because the electric lines for generating the pulsed electric field are concealed in the treatment pan and in the docking station. In this way various treatment pans can easily be coupled or docked to the coupling or docking station.

Particularly the first and the second passage opening both are provided in the bottom or in the cover of the treatment pan.

In particular the first passage opening is provided in the bottom of the treatment pan and wherein the second passage opening is provided in the cover of the treatment pan.

The passage openings can both be provided on the upper side or at the bottom side, but advantageously the ground electrode is leaded through at the bottom side of the treatment pan, and the voltage electrode is leaded through at the upper side of the treatment pan.

Preferably the cover is provided with a circumferential collar, wherein the voltage electrode is arranged against the lower edge of the circumferential collar, and wherein in the use position the circumferential collar extends into the interior of the treatment pan.

In this manner, the voltage electrode can be arranged easily upon the food to be treated in order to prevent formation of air bubbles and thereby preventing electrical breakdown through air.

In a preferred embodiment a collection chamber is provided, in the radial direction, between the circumferential collar and the upright sidewall of the treatment pan, for collecting excess liquid from the electrode chamber of the treatment pan.

As a result of pressing down the voltage electrode by the circumference collar of the cover, air bubbles are removed, whereby excess fluid is collected in the collection chamber, so that the fluid will not leak out of the treatment pan during treating the food product.

The embodiment is preferred wherein the coupling station is provided with a jaw element for receiving the treatment pan.

In particular the coupling station is provided with an upper jaw element and a lower jaw element.

More in particular the cover and/or the bottom of the treatment pan is provided with one or more recesses for receiving one or more jaw elements of the coupling station.

Preferably the upper jaw element is provided with the second connecting line for electrical connection to the second power line in the recess of the cover.

By provide the coupling station with jaw elements the treatment pan can be slid between these elements. By providing recesses in the cover and in the bottom of the treatment pan a correct positioning can be ensured of the treatment pan; and the electrical lines and connectors can be concealed.

Preferably a second treatment pan is provided, which is detachably provided in the first treatment pan, whereby in the use position the earth electrode, the voltage electrode and the circumferential collar of the cover are provided in the second treatment pan.

In particular the treatment pans are made of food-grade polycarbonate.

By applying a second treatment pan or bowl, the pans can be cleaned more easily and they can also be manufactured from a strong, transparent, plastic such as polycarbonate. Also this configuration facilitates arranging communication means or safety means. By applying a food-grade polycarbonate a very user friendly and easy to clean food treatment system is obtained.

Preferably the electrodes are made of nickel and the electrical lines are made of bronze, in particular of phosphor bronze.

It has been found that bronze and, in particular, phosphor bronze possesses a very good conductivity for a pulsed electric field accompanied by a good corrosion resistance.

The embodiment is preferred wherein the treatment pan comprises safety, which can be read out by the coupling station so that the PEF-generator can only provide a pulsed electric field when a safe, suitable, configuration is inserted in the coupling station.

Preferably electronic means are chosen for the safety means, such as a chip that can be read out, or a communication network.

By means of safety means arranged in the treatment pan or pans, which can be read out by the coupling station, switching on of the PF-generator can be prevented when no pan or an an unsuitable pan is inserted. These means may be mechanical means, but may also be electronic means, such as a remote-readable RFID chip or a chip which, by means of a communication network, is connected to the coupling station and/or the PEF-generator.

In particular the treatment pan comprises control means, such as sensors, which can be read out by the coupling station so that the PEF-generator can provide a pulsed electric field controlled by the data of the control means.

By using measurement data from the treatment pan, it is possible to improve regulation and control of the pulsed electric field.

The invention also relates to a treatment pan and a coupling station for use in the system for treating a food product.

The invention also relates to a method for treating a food product with a system.

The invention is further explained by means of a drawing and an embodiment of the system, whereby other preferred features and advantages of the invention will be apparent.
Figure 1 shows a perspective view of the system for treating a food product according to the invention;
Figure 2 shows a perspective view of the coupling station with a treatment pan arranged therein;
Figure 3 shows the treatment pan according to the invention;
Figure 4 shows an exploded view of the treatment pan with a coupling station;
Figure 5 shows a cross-sectional view of a treatment pan in the use position in the coupling station.

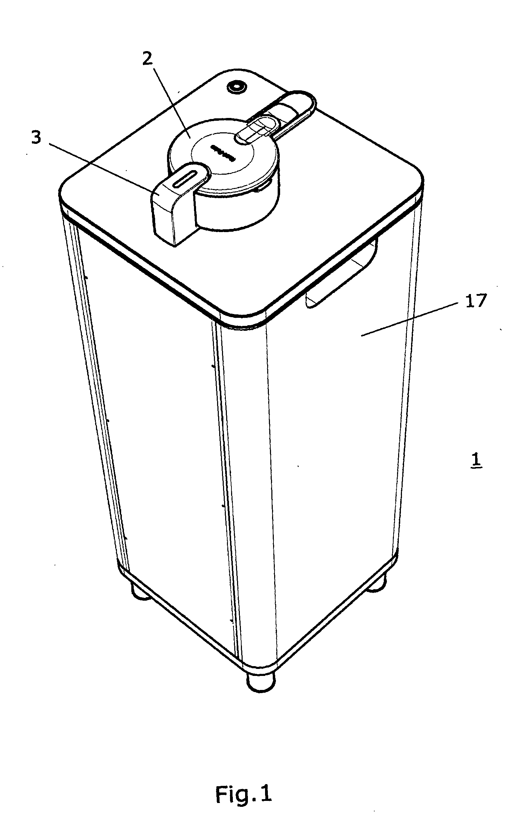

Fig.1 shows a system 1 according to the invention for treating a food product. The system comprises a coupling station 3, a treatment pan 2 and a PEF-generator 17 with control module, which is adapted for generating a pulsed electric field.

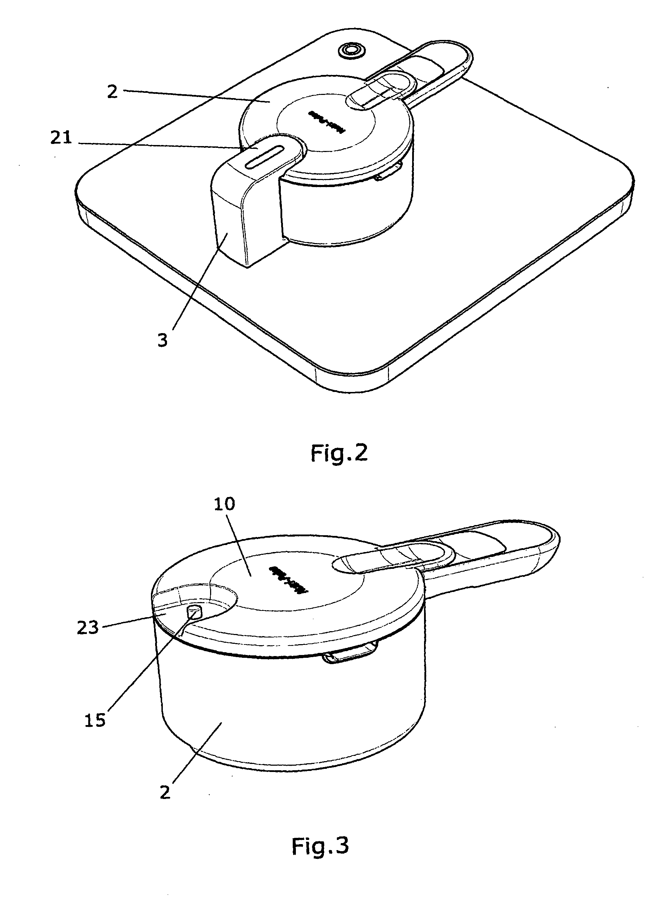

In Fig.2 the coupling-station 3 and the treatment pan 2 inserted therein are shown in more detail. The coupling station 3 is provided with an upper jaw element 21, under which the treatment pan 2 fits.

In Fig.3 is shown that the cover 10 of the treatment pan is provided with a recess 23 in which also the end of a power line 15 is arranged. The recess 23 is provided with a shape corresponding to the upper jaw element 21 of the coupling station 3.

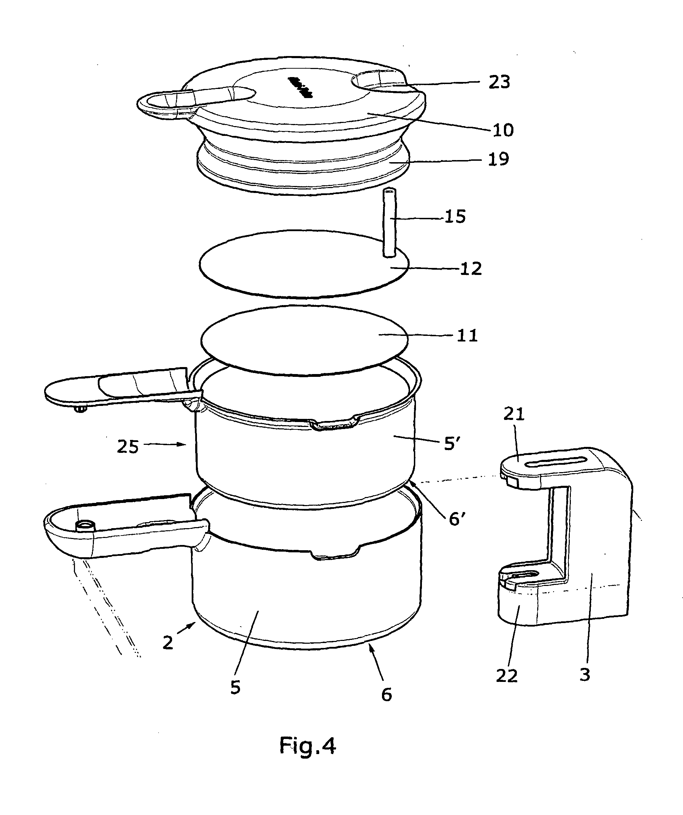

In the exploded view of Fig. 4, the various elements of the treatment pan 2 are shown in more detail. In this embodiment, a treatment pan 2 with a second treatment pan or bowl 25 is shown, but this is not essential for proper operation of the system according to the invention. The treatment pan 25 is provided with a bottom 6' and an upright side wall 5'. The ground electrode 11 is arranged at the bottom 6' of the treatment pan. A detachable cover 10 with a circumferential collar 19 is provided at the upper side of the pan. In the use position voltage electrode 12 is located against the lower edge of the circumferential collar and is thereby pressed onto the food to be treated. Voltage electrode 12 is provided with a power line 15 in the form of a rod, which protrudes in the assembled use position through a passage opening in the recess of the cover 10. Coupling station 3 is provided with an upper jaw element 21 and a lower jaw element 22, in this embodiment both being provided with a connecting line. In alternative embodiments, both connecting lines may be provided in the upper jaw element 21 or in the lower jaw element 22.

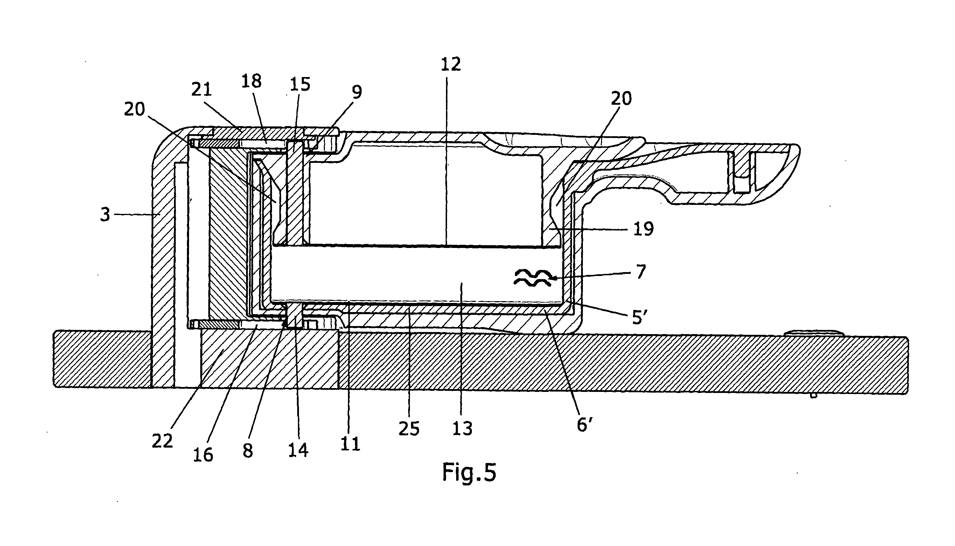

In Fig.5 is shown, in cross-section, a treatment pan 2 in the use position in the coupling station 3. Furthermore in this figure an embodiment is shown having a second treatment pan 25, but a single treatment pan is also included within the scoop of the invention. The treatment pan 25 is provided with a bottom 6' and an upright side wall 5'. In the interior of the pan (i.e. the electrode chamber 13) the food product 7 to be treated is positioned on the ground electrode 11. Voltage electrode 12 is provided on top of food 7, the circumferential collar 19 of cover 10 presses the electrode 12 down. As a result, air bubbles are expelled from the electrode chamber 13 to the collection chamber 20. Collection chamber 20 is radially formed between the outer wall of the circumferential collar 19 of the cover and the inside of the upright sidewall 5' of the treatment pan 25. From the ground electrode 11 a first power line 14 extends downwards, through the first passage opening 8, to the lower jaw element 22 of the coupling station 3. A second power line 15 extends from the voltage electrode 12 upwards, through the second passage opening 9, to upper jaw element 21 of the coupling station. When the treatment pan 2 is inserted in the correct use position between the two jaw elements 21, 22 of the coupling station, an electrical contact is made between the first power line 14 and the first connecting line 16, and between the second power line 15 and the second connecting line 18. As a result, the system is ready for imposing a pulsed electric field by means of the two electrodes 11, 12.

In order to prevent that the PEF-generator is switched on when there is no pan, - or an pan unsuitable for PEF - positioned in the coupling station, preferably safety means are arranged in the treatment pan. The coupling station can read out these safety means, so that the control module of the PEF-generator can be locked or unlocked. These means may be mechanical means, but may also be electronic means, such as a remote-readable RFID chip or a chip, which by means of a communication network, is connected to the coupling station and/or the PEF-generator.

Also, the treatment pan can be provided with control means, such as a temperature sensor or other sensors. These sensors can be in direct contact with the food or can measure variables in the treatment pan in an alternative way. The measurement data may be transmitted in a well-known manner, such as by means of the above-mentioned communication network, to the control module, so that the treatment process in the treatment pan can be controlled on the basis of the measurement data.

With a second treatment pan or bowl 25, the pans can be cleaned more easily and can also be manufactured from a strong, transparent, plastic such as polycarbonate. In Figures 4 and 5 preferred embodiments are shown of a system with two, into one another insertable, treatment pans. The treatment pans are preferably manufactured from a plastic such as a food-grade polycarbonate, but any well-known flexible and readily extrudable plastic such as polypropylene-or polyethylene can be applied. By using this food-grade polycarbonate, a particularly user-friendly and easy to clean food preparation system is obtained. Using two pans also has the advantage that the communication means and the control means may be easily incorporated into the intermediate space between the pans, without being in contact with the food.

## Claims

1. System for treating a food product by means of PEF - Pulsed Electric Field -, in which the system comprises a treatment pan (2) and a coupling station (3) i.e. docking station of a PEF-generator;
the treatment pan (2) comprising an upright sidewall (5) and a bottom for receiving the food (7) to be treated, the treatment pan (2) is provided with a first (8) and a second (9) passage opening, the treatment pan (2) comprises a removable cover (10), a ground electrode (11) positioned near the bottom (6) of the treatment pan (2), a voltage electrode (12) positioned adjacent to the cover (10) of the treatment pan (2), thereby forming an electrode chamber (13) between the two electrodes (11, 12), a first power line (14) connected to the earth electrode (11), a second power line (15) connected to the voltage electrode (12), wherein the first power line (14) extends through the first passage opening (8) to the outside and the second power line (15) extends through the second passage opening (9) to the outside;
the coupling-station (3) is arranged for receiving the treatment pan (2) in the use position for the treating the food product (7), the coupling station (3) comprises a first connecting line (16) to the PEF-generator (17) of a pulsed electric field and a second connecting line (18) to the PEF-generator, in such a way that in the use position of the treatment pan (2) a pulsed electric field is transmitted from the PEF-generator (17) through the connecting lines (16, 18) and through the power lines (14, 15) to the electrodes (11, 12) in the treatment pan (2) for treating the food product (7).

2. System according to claim 1, wherein the first (8) and the second (9) passage opening both are provided in the bottom (6) or in the cover (10) of the treatment pan (2).

3. System according to claim 1, wherein the first passage opening (8) is provided in the bottom (6) of the treatment pan (2) and wherein the second passage opening (9) is provided in the cover (10) of the treatment pan (2).

4. System according to any one of the claims 1 - 3, wherein the cover (10) is provided with a circumferential collar (19), wherein the voltage electrode (12) is arranged against the lower edge of the circumferential collar (19), and wherein in the use position the circumferential collar extends into the interior of the treatment pan (2).

5. System according to claim 4, wherein a collection chamber (20) is provided, in the radial direction, between the circumferential collar (19) and the upright sidewall (5) of the treatment pan (2), for collecting excess liquid from the electrode chamber (13) of the treatment pan (2).

6. System according to any one of the preceding claims 1 - 5, wherein the coupling station (3) is provided with a jaw element (21, 22) for receiving the treatment pan (2).

7. System according to claim 6, wherein the coupling station (3) is provided with an upper jaw element (21) and a lower jaw element (22).

8. System according to claims 6 - 7, wherein the cover (10) and/or the bottom (6) of the treatment pan (2) is provided with one or more recesses (23) for receiving one or more jaw elements (21, 22) of the coupling station (3).

9. System according to claims 7 or 8, wherein the upper jaw element (22) is provided with the second connecting line (18) for electrical connection to the second power line (15) in the recess (23) of the cover (10).

10. System according to any one of the preceding claims 1 - 8, wherein a second treatment pan (25) is provided, which is detachably provided in the first treatment pan (2), whereby in the use position the earth electrode (11), the voltage electrode (12) and the circumferential collar (19) of the cover are provided in the second treatment pan (25).

11. System according to any one of the preceding claims 1-10, wherein the treatment pans (2, 25) are made of food-grade polycarbonate.

12. System according to any one of the preceding claims 1-11, wherein the electrodes (11, 12) are made of nickel and the electrical lines (14, 15) are made of bronze, in particular of phosphor bronze.

13. System according to any one of the preceding claims 1-12, wherein safety means are provided in the treatment pan (2), which can be read out by the coupling station so that the PEF-generator (17) can only provide a pulsed electric field when a safe, suitable, configuration is inserted in the coupling station.

14. System according to claim 13, wherein electronic means are chosen for the safety means, such as a chip that can be read out, or a communication network.

15. System according to any one of the preceding claims 1-13, wherein the treatment pan (2) comprises control means, such as sensors, which can be read out by the coupling station so that the PEF-generator (17) can provide a pulsed electric field controlled by the data of the control means.

16. Treatment pan for use in the system according to any one of the preceding claims 1 to 15.

17. Coupling station for use in the system according to any one of the preceding claims 1 to 15.

18. Method for treating a food product with a system according to any one of the preceding claims 1 to 15.

## Patentansprüche

1. System zum Behandeln eines Nahrungsproduktes mittels PEF - Gepulstes Elektrisches Feld -, in welchem das System einen Behandlungstopf (2) und eine Kopplungsstation (3), d.h. Andockstation eines PEF-Generators, umfasst;
wobei der Behandlungstopf (2) eine aufrechte Seitenwand (5) und einen Boden zum Aufnehmen der zu behandelnden Nahrung (7) umfasst, wobei der Behandlungstopf (2) mit einer ersten (8) und einer zweiten (9) Durchgangsöffnung bereitgestellt ist, wobei der Behandlungstopf (2) umfasst: eine entfernbare Abdeckung (10), eine Erdelektrode (11), welche nahe dem Boden (6) des Behandlungstopfs (2) angeordnet ist, eine Spannungselektrode (12), welche neben der Abdeckung (10) des Behandlungstopfs (2) angeordnet ist, wobei dadurch eine Elektrodenkammer (13) zwischen den zwei Elektroden (11, 12) gebildet wird, eine erste Stromleitung (14), welche mit der Erdelektrode (11) verbunden ist, eine zweite Stromleitung (15), welche mit der Spannungselektrode (12) verbunden ist, wobei sich die erste Stromleitung (14) durch die erste Durchgangsöffnung (8) zur Außenseite erstreckt und sich die zweite Stromleitung (15) durch die zweite Durchgangsöffnung (9) zur Außenseite erstreckt;
wobei die Kopplungsstation (3) angeordnet ist zur Aufnahme des Behandlungstopfes (2) in der Verwendungsposition zum Behandeln des Nahrungsproduktes (7), wobei die Kopplungsstation (3) eine erste Verbindungsleitung (16) zu dem PEF-Generator (17) eines gepulsten elektrischen Feldes und eine zweite Verbindungsleitung (18) zu dem PEF-Generator umfasst, in solcher Weise, dass in der Verwendungsposition des Behandlungstopfes (2) ein gepulstes elektrisches Feld von dem PEF-Generator (17) durch die Verbindungsleitungen (16, 18) und durch die Stromleitungen (14, 15) zu den Elektroden (11, 12) in den Behandlungstopf (2) übertragen wird zum Behandeln des Nahrungsproduktes (7).

2. System nach Anspruch 1, wobei die erste (8) und die zweite (9) Durchgangsöffnung beide in dem Boden (6) oder in der Abdeckung (10) des Behandlungstopfes (2) bereitgestellt sind.

3. System nach Anspruch 1, wobei die erste Durchgangsöffnung (8) in dem Boden (6) des Behandlungstopfes (2) bereitgestellt ist, und wobei die zweite Durchgangsöffnung (9) in der Abdeckung (10) des Behandlungstopfes (2) bereitgestellt ist.

4. System nach einem der Ansprüche 1 - 3, wobei die Abdeckung (10) mit einem umlaufenden Kranz (19) bereitgestellt ist, wobei die Spannungselektrode (12) gegen die untere Kante des umlaufenden Kranzes (19) angeordnet ist, und wobei sich in der Verwendungsposition der umlaufende Kranz in das Innere des Behandlungstopfes (2) erstreckt.

5. System nach Anspruch 4, wobei eine Sammlungskammer (20), in der radialen Richtung, zwischen dem umlaufenden Kranz (19) und der aufrechten Seitenwand (5) des Behandlungstopfes (2), bereitgestellt ist zum Sammeln überschüssiger Flüssigkeit aus der Elektrodenkammer (13) des Behandlungstopfes (2).

6. System nach einem der vorstehenden Ansprüche 1 - 5, wobei die Kopplungsstation (3) mit einem Backenelement (21, 22) zum Aufnehmen des Behandlungstopfes (2) bereitgestellt ist.

7. System nach Anspruch 6, wobei die Kopplungsstation (3) mit einem oberen Backenelement (21) und einem unteren Backenelement (22) bereitgestellt ist.

8. System nach Ansprüchen 6 - 7, wobei die Abdeckung (10) und/oder der Boden (6) des Behandlungstopfes (2) mit einer oder mehreren Vertiefungen (23) bereitgestellt ist zum Aufnehmen eines oder mehrerer Backenelemente (21, 22) der Kopplungsstation (3).

9. System nach Ansprüchen 7 oder 8, wobei das obere Backenelement (22) mit der zweiten Verbindungsleitung (18) zur elektrischen Verbindung zu der zweiten Stromleitung (15) in der Vertiefung (23) der Abdeckung (10) bereitgestellt ist.

10. System nach einem der vorstehenden Ansprüche 1 - 8, wobei ein zweiter Behandlungstopf (25) bereitgestellt ist, welcher lösbar in dem ersten Behandlungstopf (2) bereitgestellt ist, wobei in der Verwendungsposition die Erdelektrode (11), die Spannungselektrode (12) und der umlaufende Kranz (19) der Abdeckung in dem zweiten Behandlungstopf (25) bereitgestellt sind.

11. System nach einem der vorstehenden Ansprüche 1 - 10, wobei die Behandlungstöpfe (2, 25) aus nahrungsgeeignetem Polykarbonat hergestellt sind.

12. System nach einem der vorstehenden Ansprüche 1 - 11, wobei die Elektroden (11, 12) aus Nickel hergestellt sind und die Stromleitungen (14, 15) aus Bronze, insbesondere aus Phosphor-Bronze, hergestellt sind.

13. System nach einem der vorstehenden Ansprüche 1 - 12, wobei Sicherungsmittel in dem Behandlungstopf (2) bereitgestellt sind, welche durch die Kopplungsstation ausgelesen werden können, so dass der PEF-Generator (17) nur dann ein gepulstes elektrisches Feld bereitstellen kann, wenn eine sichere, geeignete Konfiguration in die Kopplungsstation eingeführt ist.

14. System nach Anspruch 13, wobei elektronische Mittel für die Sicherungsmittel gewählt sind, wie ein Chip, welcher ausgelesen werden kann, oder ein Kommunikationsnetzwerk.

15. System nach einem der vorstehenden Ansprüche 1 - 13, wobei der Behandlungstopf (2) Steuerungsmittel, wie Sensoren, umfasst, welche durch die Kopplungsstation ausgelesen werden können, so dass der PEF-Generator (17) ein gepulstes elektrisches Feld bereitstellen kann, welches durch die Daten der Steuerungsmittel gesteuert wird.

16. Behandlungstopf zur Verwendung in dem System nach einem der vorstehenden Ansprüche 1 bis 15.

17. Kopplungsstation zur Verwendung in dem System nach einem der vorstehenden Ansprüche 1 bis 15.

18. Verfahren zum Behandeln eines Nahrungsproduktes mit einem System nach einem der vorstehenden Ansprüche 1 bis 15.

## Revendications

1. Système pour traiter un produit alimentaire au moyen de PEF - champ électrique pulsé -, dans lequel le système comprend un bac de traitement (2) et une station de couplage (3), c'est-à-dire une station d'accueil d'un générateur de PEF ;
le bac de traitement (2) comprenant une paroi latérale droite (5) et un fond pour recevoir l'aliment (7) à traiter, le bac de traitement (2) est prévu avec une première (8) et une seconde (9) ouverture de passage, le bac de traitement (2) comprend un couvercle amovible (10), une électrode de masse (11) positionnée à proximité du fond (6) du bac de traitement (2), une électrode de tension (12) positionnée de manière adjacente au couvercle (10) du bac de traitement (2), formant ainsi une chambre d'électrode (13) entre les deux électrodes (11, 12), une première ligne électrique (14) raccordée à l'électrode de terre (11), une seconde ligne électrique (15) raccordée à l'électrode de tension (12), dans lequel la première ligne électrique (14) s'étend à travers la première ouverture de passage (8) jusqu'à l'extérieur et la seconde ligne électrique (15) s'étend à travers la seconde ouverture de passage (9) jusqu'à l'extérieur ;
la station de couplage (3) est agencée pour recevoir le bac de traitement (2) dans la position d'utilisation pour le traitement du produit alimentaire (7), la station de couplage (3) comprend une première ligne de connexion (16) jusqu'au générateur de PEF (17) d'un champ électrique pulsé et une seconde ligne de connexion (18) jusqu'au générateur de PEF, de sorte que, dans la position d'utilisation du bac de traitement (2), un champ électrique pulsé est transmis du générateur de PEF (17) en passant par les lignes de connexion (16, 18) et par les lignes électriques (14, 15) aux électrodes (11, 12) dans le bac de traitement (2) pour traiter le produit alimentaire (7).

2. Système selon la revendication 1, dans lequel la première (8) et la seconde ouverture de passage (9) sont toutes deux prévues au fond (6) ou dans le couvercle (10) du bac de traitement (2).

3. Système selon la revendication 1, dans lequel la première ouverture de passage (8) est prévue au fond (6) du bac de traitement (2) et dans lequel la seconde ouverture de passage (9) est prévue dans le couvercle (10) du bac de traitement (2).

4. Système selon l'une quelconque des revendications 1 à 3, dans lequel le couvercle (10) est prévu avec un collier circonférentiel (19), dans lequel l'électrode de tension (12) est agencée contre le bord inférieur du collier circonférentiel (19) et dans lequel, dans la position d'utilisation, le collier circonférentiel s'étendant dans l'intérieur du bac de traitement (2).

5. Système selon la revendication 4, dans lequel on prévoit une chambre de collecte (20) dans la direction radiale, entre le collier circonférentiel (19) et la paroi latérale droite (5) du bac de traitement (2), pour collecter le liquide en excès de la chambre d'électrode (13) du bac de traitement (2).

6. Système selon l'une quelconque des revendications 1 à 5, dans lequel la station de couplage (3) est prévue avec un élément de mâchoire (21, 22) pour recevoir le bac de traitement (2).

7. Système selon la revendication 6, dans lequel la station de couplage (3) est prévue avec un élément de mâchoire supérieur (21) et un élément de mâchoire inférieur (22).

8. Système selon les revendications 6 à 7, dans lequel le couvercle (10) et/ou le fond (6) du bac de traitement (2) est prévu avec un ou plusieurs évidements (23) pour recevoir un ou plusieurs éléments de mâchoire (21, 22) de la station de couplage (3).

9. Système selon les revendications 7 ou 8, dans lequel l'élément de mâchoire supérieur (22) est prévu avec la seconde ligne de connexion (18) pour la connexion électrique à la seconde ligne électrique (15) dans l'évidement (23) du couvercle (10).

10. Système selon l'une quelconque des revendications 1 à 8, dans lequel on prévoit un second bac de traitement (25) qui est prévu de manière détachable dans le premier bac de traitement (2), moyennant quoi dans la position d'utilisation, l'électrode de terre (11), l'électrode de tension (12) et le collier circonférentiel (19) du couvercle sont prévus dans le second bac de traitement (25).

11. Système selon l'une quelconque des revendications 1 à 10, dans lequel les bacs de traitement (2, 25) sont réalisés avec du polycarbonate de qualité alimentaire.

12. Système selon l'une quelconque des revendications 1 à 11, dans lequel les électrodes (11, 12) sont réalisées à partir de nickel et les lignes électriques (14, 15) sont réalisées à partir de bronze, en particulier de bronze phosphoreux.

13. Système selon l'une quelconque des revendications 1 à 12, dans lequel on prévoit des moyens de sécurité dans le bac de traitement (2) qui peuvent être lus par la station de couplage de sorte que le générateur de PEF (17) ne peut fournir un champ électrique pulsé que lorsqu'une configuration sûre et appropriée est insérée dans la station de couplage.

14. Système selon la revendication 13, dans lequel des moyens électroniques sont fournis pour les moyens de sécurité, telle qu'une puce qui peut être lue, ou un réseau de communication.

15. Système selon l'une quelconque des revendications 1 à 13, dans lequel le bac de traitement (2) comprend des moyens de commande tels que des capteurs, qui peuvent être lus par la station de couplage de sorte que le générateur de PEF (17) peut fournir un champ électrique pulsé commandé par les données des moyens de commande.

16. Bac de traitement destiné à être utilisé dans le système selon l'une quelconque des revendications 1 à 15.

17. Station de couplage destinée à être utilisée dans le système selon l'une quelconque des revendications 1 à 15.

18. Procédé pour traiter un produit alimentaire avec un système selon l'une quelconque des revendications 1 à 15.
